# EUROPÄISCHE PATENTANMELDUNG

(11) **EP 3 466 648 A1**
(43) Veröffentlichungstag der Anmeldung: **10.04.2019**
(21) Anmeldenummer: 17195460.5
(22) Anmeldetag: 09.10.2017
(51) Int. Cl.: B29C 64/165, B01J 35/04, B01J 37/00

(54) **VERFAHREN ZUR HERSTELLUNG VON KATALYSATORFORMKÖRPERN DURCH MIKROEXTRUSION**

(71) Anmelder: BASF SE, 67056 Ludwigshafen am Rhein (DE)
(72) Erfinder: WALSDORFF, Christian, 67056 Ludwigshafen (DE); KENNEMA, Marco Oskar, 67056 Ludwigshafen (DE); GROENEVELD, Esther, 3454 PK De Meern (NL); BERBEN, Peter, 3454 PK De Meern (NL); REESINK, Bernard, 3454 PK De Meern (NL)
(74) Vertreter: Schuck, Alexander

(57) **Zusammenfassung**

Die Erfindung betrifft ein Verfahren zur Herstellung von Katalysatorformkörpern durch Mikroextrusion, bei dem eine pastöse Suspension eines Katalysatorformkörper-Vorläufermaterials in einem flüssigen Verdünnungsmittel durch eine bewegliche Mikroextrusionsdüse extrudiert und durch Bewegung der Mikroextrusionsdüse ein Katalysatorformkörper-Vorläufer schichtweise erzeugt wird und der Katalysatorformkörper-Vorläufer anschließend einer thermischen Behandlung unterworfen wird, dadurch gekennzeichnet, dass auf einer beweglichen Plattform durch eine Mehrzahl von Mikroextrusionsdüsen eine Mehrzahl von Katalysatorformköper-Vorläufern gleichzeitig erzeugt wird.

## Beschreibung

Die Erfindung betrifft ein Verfahren zur Herstellung von Katalysatorformkörpern durch Mikroextrusion. Verfahren zur additiven Fertigung von chemischen Katalysatoren mittels Mikroextrusion werden auch als "Robocasting" oder "Direct-Ink-Writing" (DIM) bezeichnet.

In vielen Prozessen werden chemische Katalysatoren in Form von Formkörpern eingesetzt. Solche Formkörper haben oft die Form von Zylindern, Hohlzylindern oder Kugeln. Auch Formkörper mit beispielsweise trilobalen oder sternförmigen Querschnitten oder mit mehreren hohlzylindrischen Öffnungen werden verwendet. Solche Formkörper werden durch Extrusion, Tablettierungen oder im Fall von Kugeln auch durch Agglomerisation auf drehenden Tellern hergestellt.

Allerdings sind die topologischen Freiheitsgrade von Formkörpern, die mit solchen klassischen Methoden hergestellt werden können, in der Regel beschränkt.

EP 1127618 A1 beschreibt durch Tablettierung hergestellte Hohlzylinder mit abgerundeten Stirnflächen. DE 102 26 729 A1 beschreibt durch Extrusion hergestellte Zylinder mit Einkerbungen parallel zur Extrusionsrichtung. WO 2016/156042 A1 beschreibt durch Extrusion hergestellte Formkörper mit vier parallelen hohlzylindrischen Öffnungen.

Eine größere Vielfalt von Formkörpertopologien lässt sich mittels additiver Fertigungsverfahren herstellen, die oft auch als 3D-Druck-Verfahren bezeichnet werden.

Unter dem Oberbegriff additive Fertigungsverfahren werden eine Reihe unterschiedlicher Verfahren zusammengefasst. Ihnen gemeinsam ist, dass ein dreidimensionaler Formkörper additiv, also durch sukzessives Hinzufügen von Material, aufgebaut wird.

Für die Herstellung chemischer Katalysatoren wurden insbesondere zwei Arten additiver Fertigungsverfahren beschrieben.

US 8,119,554 beschreibt einen sogenannten Pulverbett-Druckprozess zur Herstellung chemischer Katalysatoren. US 9,278,338 beschreibt ebenfalls einen sogenannten Pulverbett-Druckprozess zur Herstellung chemischer Katalysatoren. In beiden Schriften werden auch Katalysatorformkörper mit Geometrien beschrieben, die mittels klassischer Tablettier- oder Extrusionsprozesse nicht zugänglich wären. Auch WO 2016/166526 und WO 2016/166523 beschreiben die Herstellung von Katalysatorformkörpern mit Geometrien, die mittels klassischer Tablettier- oder Extrusionsprozesse nicht zugänglich wären.

Allerdings sind Pulverdruck-Verfahren nur begrenzt zur Herstellung chemischer Katalysatoren geeignet. Es ergeben sich beispielsweise Schwierigkeiten, wenn Bestandteile des Pulvers mit dem flüssigen Klebemittel reagieren oder darin löslich sind. Auch müssen die so erhaltenen Formkörper in der Regel bei hohen Temperaturen kalziniert werden, um eine ausreichende mechanische Stabilität zu erreichen, wodurch die katalytischen Eigenschaften stark beeinflusst werden können. Auch die spezifische Dichte und damit auch die in einem Volumenelement zur Verfügung stehende Aktivmasse sind oftmals gering.

C.R. Tubio et al. beschreiben in Journal of Catalysis 334 (2016) 110 bis 115 die Herstellung eines chemischen Katalysatorformkörpers mittels eines Robocasting-Verfahrens. Der dabei erhaltene Katalysatorformkörper mit einer von den Autoren als "wood-pile" (Holzstapel) bezeichneten Struktur wäre ebenfalls mit klassischen Extrusions- und Tablettierverfahren nicht zugänglich. Ein Vorteil solcher Robocasting-Methoden ist, dass die Ausgangsmaterialien ähnlich wie in klassischen Extrusionsprozessen behandelt werden, was eine relativ breite Anwendbarkeit der Methoden mit sich bringt.

Katalysatorformkörper können einzeln oder in geringer Stückzahl, beispielsweise in Form von Monolithen wie in Autoabgaskatalysatoren, eingesetzt werden. In Prozessen zur Herstellung von Chemikalien werden Katalysatorformkörper regelmäßig nicht einzeln, sondern in Form von Schüttungen, sogenannten Katalysatorbetten, eingesetzt.

Formkörper mit Geometrien, wie sie durch additive Fertigungstechniken zugänglich sind, können für chemische Katalysatoren gegenüber klassischen Geometrien, wie sie durch Tablettierung oder Extrusion zugänglich sind, verschiedene Vorteile haben. Insbesondere können Formkörper mit makroskopischen Kanalstrukturen eine relativ hohe geometrische Oberfläche pro Katalysatorbett-Volumen bei relativ niedrigem Druckverlust aufweisen.

Additive Fertigungsverfahren werden oftmals auch als "rapid prototyping" bezeichnet. Sie wurden also oftmals entwickelt, um typischerweise als Einzelstück oder in kleiner Auflage Prototypen bestimmter Formkörper herstellen zu können. Chemische Katalysatorformkörper für den Einsatz in kommerziellen Reaktoren werden aber regelmäßig in einem Maßstab von mehreren Tonnen bis zu mehreren hundert Tonnen für die Befüllung einer einzigen Reaktorstraße benötigt. Dies entspricht Millionen von Formkörpern.

Aufgabe der vorliegenden Erfindung ist es, ein Verfahren zur Herstellung in großer Stückzahl von Katalysatorformkörpern für chemische Prozesse mit Geometrien, wie sie durch klassische Tablettier- oder Extrusionsverfahren nicht zugänglich sind, bereitzustellen.

Gelöst wird die Aufgabe durch ein Verfahren zur Herstellung von Katalysatorformkörpern durch Mikroextrusion, bei dem eine pastöse Suspension eines Katalysatorformkörper-Vorläufermaterials in einem flüssigen Verdünnungsmittel durch eine bewegliche Mikroextrusionsdüse extrudiert und durch Bewegung der Mikroextrusionsdüse ein Katalysatorformkörper-Vorläufer schichtweise erzeugt wird und der Katalysatorformkörper-Vorläufer anschließend einer thermischen Behandlung unterworfen wird, dadurch gekennzeichnet, dass auf einer beweglichen Plattform durch eine Mehrzahl von Mikroextrusionsdüsen eine Mehrzahl von Katalysatorformköper-Vorläufern gleichzeitig erzeugt wird.

Erfindungsgemäß werden Formkörper aus einem Katalysatorvorläufermaterial mittels eines Robocasting-Prozesses auf einer beweglichen Unterlage (Plattform) aufgebaut. Die Plattform kann dabei kontinuierlich oder diskontinuierlich relativ zu den Mikroextrusionsdüsen bewegt werden.

Die so hergestellten Katalysatorformkörper können nur das Trägermaterial, das Trägermaterial und eine oder mehrere Aktivkomponenten oder nur Aktivkomponenten enthalten, abhängig von der Art der eingesetzten extrudierbaren Formulierung. Vorzugsweise werden durch Mikroextrusion und Aneinanderfügen von (diskontinuierlichen oder kontinuierlichen) Strängen makroskopisch poröse Katalysatorformkörper hergestellt. Es können aber auch massive Katalysatorformkörper erzeugt werden.

Die 3D-Mikroextrusionstechnik (3D-Robocasting-Technik) ist an sich bekannt und beispielsweise in US 7,527,671, US 6,027,326, US 6,401,795, Catalysis Today 273 (2016), Seiten 234 bis 243, Journal of Catalysis 334 (2016), Seiten 110 bis 115 oder US 6,993,406 beschrieben.

Im Allgemeinen haben die Mikroextrusionsdüsen einen Durchmesser von weniger als 5 mm, vorzugsweise von weniger als 4 mm, besonders bevorzugt von 0,05 bis 3 mm, insbesondere von 0,2 bis 2 mm.

Die geometrische Auflösung von nach dem erfindungsgemäßen Verfahren hergestellten Katalysator-Formkörpern wird naturgemäß durch den Durchmesser der Mikroextrusionsdüsen definiert. Bevorzugt werden nach dem erfindungsgemäßen Verfahren Katalysatorformkörper mit einem minimalen Durchmesser von mindestens 3 mm, besonders bevorzugt von mindestens 5 mm und insbesondere von mindestens 10 mm hergestellt.

Die maximale Größe der erfindungsgemäß hergestellten Formkörper wird im wesentlich durch die Abmessungen der erfindungsgemäßen Plattform und etwaiger Einhausungen sowie den Bewegungsbereich der Mikroextrusionsköpfe definiert. Bei relativ zum Abstand der Mikroextrusionsdüsen großen Formkörpern können auch mehrere Düsen gleichzeitig zum Aufbau eines gemeinsamen Formkörpers eingesetzt werden. Der maximale Durchmesser der erfindungsgemäß hergestellten Katalysatoren beträgt vorzugsweise maximal 1 m, besonders bevorzug maximal 30 cm und insbesondere maximal 10 cm.

Abmessungen größer als 10 cm kommen insbesondere bei monolithischen Formkörpern in Betracht, die in der Regel sehr genau in einen Apparat zur Durchführung katalytischer Reaktionen eingepasst werden. Beispiele für solche Anwendungen finden sich bei vielen Verfahren zur Abgasbehandlung.

Abmessungen von maximal 10 cm, bevorzugt von maximal 5 cm und insbesondere von maximal 3 cm kommen insbesondere bei Formkörpern in Betracht, die in einem Apparat zur Durchführung katalytischer Reaktionen nicht einzeln eingepasst werden, sondern als sogenannte Schüttung in einem Katalysatorbett zum Einsatz kommen. Beispiele für solche Apparate sind adiabate oder isotherme Reaktoren oder beliebige Zwischenformen, insbesondere in Form von Rohrbündel-, Platten-, Schütt- oder Hordenreaktoren. Beispiele für solche Verfahren finden sich bei vielen Prozessen der chemischen Industrie zur Herstellung von chemischen Verbindungen.

Durch Trocknung oder weitere thermische Behandlung kann auch ein Schrumpfen der erfindungsgemäß hergestellten Katalysatorformkörper eintreten, das bei der Dimensionierung der Mikroextrusionsdüsen und der frisch mikroextrudierten ("grünen") Formkörper gegebenenfalls zu berücksichtigen ist.

Als pastöse Suspensionen sind prinzipiell Formulierungen geeignet, die auch in Standard-Extrusionsverfahren eingesetzt werden. Voraussetzung ist, dass die Partikelgröße des Katalysatorvorläufermaterials hinreichend klein für die Mikroextrusionsdüse ist. Die größten Partikel (d99-Wert) sollten vorzugsweise mindestens fünfmal kleiner, insbesondere mindestens zehnmal kleiner als der Düsendurchmesser sein.

Geeignete Formulierungen weisen die für die Mikroextrusion erforderlichen rheologischen Eigenschaften auf. In der oben genannten Literatur wird im Einzelnen beschrieben, wie geeignete rheologische Eigenschaften eingestellt werden können. Falls erforderlich, können den Formulierungen Bindemittel und viskositätsmodifizierende Zusätze wie Stärke oder Carboxymethylcellulose zugesetzt werden.

Vorzugsweise enthält die mikroextrudierbare, pastöse Suspension Wasser als flüssiges Verdünnungsmittel, es können aber auch organische Lösungsmittel eingesetzt werden. Die Suspension kann neben katalytisch aktiven Massen oder Vorläuferverbindungen für katalytisch aktive Massen auch ein anorganisches Träger- oder Inertmaterial enthalten. Beispiele für häufig verwendete Träger- oder Inertmaterialien sind Silziumdioxid, Aluminiumoxid, Diatomeenerde, Titandioxid, Zirkoniumdioxid, Magnesiumoxid, Calciumoxid, Hydrotalcite, Spinelle, Perovskite, Metallphosphate, Metallsilicate, Zeolithe, Steatite, Cordierite, Carbide und deren Gemische.

Mit dem erfindungsgemäßen Verfahren können auch Formkörper hergestellt werden, die im Wesentlichen nur ein Trägermaterial oder ein Inertmaterial enthalten. Solche nach dem erfindungsgemäßen Verfahren hergestellten Formkörper können dann in weiteren Verfahrensschritten, beispielsweise durch Tränkung oder Beschichtung und gegebenenfalls weitere thermische Behandlungsschritte, in Katalysatorformkörper umgewandelt werden.

Die geometrische Auflösung von nach dem erfindungsgemäßen Verfahren hergestellten Katalysator-Formkörpern wird naturgemäß durch den Durchmesser der Mikroextrusionsdüsen definiert. Bevorzugt werden nach dem erfindungsgemäße Verfahren Katalysatorformkörper mit einem minimalen Durchmesser von mindestens 3 mm, besonders bevorzugt von mindestens 5 mm und insbesondere von mindestens 10 mm hergestellt.

Beispiele für den Einsatz des erfindungsgemäßen Verfahrens können monolithische Formkörper zur Behandlung von Abgasen, beispielsweise Stickoxiden oder Lachgas sein.

Beispiele für den Einsatz des erfindungsgemäßen Verfahren können auch Formkörper sein, die typischerweise als Schüttung in einem Katalysatorbett eingesetzt werden, beispielsweise in Verfahren zur Herstellung von Synthesegas, zur Oxidation von Schwefeldioxid zu Schwefeltrioxid oder zur Oxidation von Ethylen zu Ethylenoxid.

Geeignete extrudierbare Formulierungen zur Herstellung von Katalysatoren für die Oxidation von SO₂ zu SO₃ sind beispielsweise in WO 2016/156042 A1 beschrieben, siehe insbesondere Beispiel 1 der WO 2016/156042 A1. In einer Ausführungsform wird das erfindungsgemäße Verfahren zur Herstellung von Katalysatorformkörpern für die Oxidation von SO₂ zu SO₃ eingesetzt.

In einer Ausführungsform der Erfindung wird die Plattform nach der schichtweisen Erzeugung einer Mehrzahl von Katalysatorformkörper-Vorläufern diskontinuierlich bewegt. Beispielsweise kann die Plattform nach dem Robocasting einer Mehrzahl von Formkörpern so weit in Vorwärtsrichtung verfahren werden, dass für den nächsten Robocasting-Schritt wieder ein freier Bereich der Plattform zur Verfügung steht.

In einer bevorzugten Ausführungsform der Erfindung wird die Plattform während der schichtweisen Erzeugung der Katalysatorformkörper jedoch kontinuierlich bewegt, wobei durch die Bewegung der Mikrodüsen die Bewegung der Plattform kompensiert wird. Dazu ist die elektronische Steuerung der Mikroextrusionsdüsen in den drei Raumrichtungen so ausgestaltet, dass die Translationsbewegung der Plattform durch eine zusätzliche Translationsbewegung der Mikroextrusionsdüsen kompensiert wird. Eine solche steuerungstechnische Kompensation durch vektorielle Bewegungsanteile, die die Bewegung der Plattform kompensieren, ist dem Fachmann geläufig.

Die geometrische Auflösung (Genauigkeit) der mit dem erfindungsgemäßen Verfahren hergestellten Katalysatorformkörper wird auch von der Genauigkeit der Bewegung und Positionierung von Mikroextrusionsdüsen und Plattform, insbesondere auch von der Genauigkeit der Relativbewegung zwischen Mikroextrusionsdüsen und Plattform, definiert. Eine Abschätzung der für eine angestrebte Auflösung der erfindungsgemäßen Formkörper erforderlichen Genauigkeit der Bewegung und Positionierung von Mikroextrusionsdüsen und Plattform ist dem Fachmann nach dem Stand der Technik unter Verwendung allgemeiner mathematischer Kenntnisse möglich.

Erfindungsgemäß wird der Mikroextrusionsschritt nicht nur mit einer Mikroextrusionsdüse, sondern mit einer Mehrzahl von Mikroextrusionsdüsen durchgeführt. Diese können in einer Reihe senkrecht oder schräg versetzt zur Bewegungsrichtung der Plattform angebracht sein.

Besonders bevorzugt können sie auch in mehreren Reihen gestaffelt hintereinander angeordnet sein.

In einer bevorzugten Ausführungsform ist die Mehrzahl der Mikroextrusionsdüsen gegeneinander so fixiert, dass sie parallel mit einer gemeinsamen Bewegungsvorrichtung in den drei Raumrichtungen bewegt werden können. Dies schließt auch Bewegungsanteile zur Kompensation einer kontinuierlichen Plattformbewegung mit ein. In dieser Ausführungsform ist also eine Mehrzahl von Mikroextrusionsdüsen miteinander verbunden und bewegt sich synchron.

Nachdem eine Mehrzahl von Formkörpern in einem Mikroextrusionsschritt mit einer Mehrzahl von Mikroextrusionsdüsen fertig ausgeformt worden ist, wird die Mehrzahl von Mikroextrusionsdüsen über noch freie Bereiche der Plattform positioniert, wo anschließend weitere Formkörper ausgeformt werden. Dabei können die Mikroextrusionsdüsen so bewegt werden, dass gegebenenfalls vorhandene Lücken in einer Anordnung von bereits ausgeformten Formkörpern gefüllt werden, um die Belegung und Kapazität der Plattform zu erhöhen. Die Mikroextrusionsdüsen können aber auch zu einem Abschnitt der Plattform, auf dem sich noch keine Formkörper befinden, bewegt werden.

Vorzugsweise bewegt sich die Plattform kontinuierlich oder diskontinuierlich von einem Bereich, in dem die Robocasting-Schritte durchgeführt werden, zu einem Bereich, in dem eine thermische Behandlung durchgeführt wird. In einer bevorzugten Ausführungsform ist die bewegliche Plattform ein umlaufendes Band. Das umlaufende Band kann ein kontinuierliches Band, beispielsweise ein Hartgummi-Band, sein. Bevorzugt wird ein Kettenband oder ein Plattenband aus einem metallischen Werkstoff eingesetzt. Es können beispielsweise auch keramische Werkstoffe als Plattform und Segmente einer Bandstruktur eingesetzt werden. Auch Kunststoffe, beispielsweise Teflon, können eingesetzt werden, sofern die Temperaturen der thermischen Behandlung das zulassen. Diese Bandstruktur ist vorzugsweise wie die Kette eines Raupenfahrzeugs angeordnet, so dass Segmente der Bandstruktur nach einem Umlauf wieder an ihren Ausgangspunkt zurückkehren.

In einer bevorzugten Ausführungsform werden auf dem umlaufenden Band die KatalysatorFormkörper einer Trocknung als thermischer Behandlung unterworfen, wobei das Band mindestens eine Trocknungszone durchläuft. Die Trocknung kann in mehreren Trocknungszonen bei unterschiedlichen Temperaturen erfolgen. Vorzugsweise weist das umlaufende Band Perforationen auf und es erfolgt eine Trocknung mittels eines erwärmten Gases, das in der mindestens einen Trocknungszone die Perforationen durchströmt. Erzeugung der Katalysatorformkörper-Vorläufer durch Mikroextrusion und thermische Behandlung derselben können aber auch auf verschiedenen umlaufenden Bändern erfolgen.

Dabei wird das Band nach Durchlaufen eines ersten Bereichs, in dem die Robocasting-Schritte durchgeführt werden, und mindestens eines zweiten Bereichs, in dem eine thermische Behandlung durchgeführt wird, so umgelenkt, dass die Formkörper herabfallen und beispielsweise in einen weiteren Verfahrensschritt geleitet werden, während das Band in umgekehrter Richtung zurückgeführt wird und nach einer abermaligen Umlenkung wieder in den Bereich, in dem die Robocasting-Schritte durchgeführt werden, geführt wird.

Die Formkörper können nach dem Verlassen der Bandstruktur einem oder mehreren weiteren Verfahrensschritten, beispielsweise einer weiteren thermischen Behandlung, insbesondere bei höheren Temperaturen, oder einem Konfektionier- oder Verpackungsschritt unterworfen werden.

Das Umlenken der erfindungsgemäßen Bandstruktur kann beispielsweise mittels Rollen, Rädern oder Zahnrädern erfolgen.

Die Plattform und Bandstruktur ist bevorzugt perforiert, also mit Durchlässen versehen, so dass ein Gasstrom vertikal durch die Bandstruktur geleitet werden kann, insbesondere um eine gleichmäßige thermische Behandlung oder Trocknung der Formkörper zu gewährleisten.

Die Plattform und Bandstruktur kann in Form eines Netzes oder Geflechts oder in Form von mit Scharnieren verbundenen Platten ausgelegt sein. Bevorzugt ist das Band oder sind die einzelnen Segmente des Bands aus einem metallischen Werkstoff ausgeführt.

Der Wärmeeintrag im thermischen Behandlungsschritt kann beispielsweise mittels Mikrowellenstrahlung, elektrischer oder dampfbeschickter Aggregate, direkter Befeuerung mit einem Brenngas oder durch Einspeisung eines vorerwärmten Gases erfolgen.

Bei dem erfindungsgemäßen Verfahren wird eine schnelle Ausformung der Formkörper im Robocasting-Schritt angestrebt. Dabei ist eine möglichst gleichmäßige Ausflussgeschwindigkeit an den Mikroextrusionsdüsen vorteilhaft. Insbesondere kann es vorteilhaft sein, die Ausflussgeschwindigkeit nach Abschluss der Ausformung eines Formkörpers nicht zu reduzieren oder den Ausfluss ganz zu unterbrechen. Bevorzugt ist vielmehr eine kontinuierliche Ausflussgeschwindigkeit, so dass von einer Mikroextrusionsdüse nacheinander ausgeformte Formkörper durch eine dünne Materialbrücke verbunden sein können oder sich an den Formkörpern entsprechende gratartige Fragmente befinden können. Das ist in der Regel unproblematisch. Solch überschüssiges Material wird in der Regel in den nachfolgenden Prozessschritten, etwa beim Herunterfallen von der Plattform, durch Abrieb von den Formkörpern getrennt und kann dann in einem, bevorzugt kontinuierlich vor einem Abfüllschritt betriebenem Siebschritt von den Formkörpern abgetrennt werden. Dieses abgetrennte Material kann nach einer Vorbehandlung, beispielsweise einem Mahlschritt, bevorzugt als Beimischung zu frischen Ausgangsstoffen wieder zur Herstellung der mikroextrusionsfähigen Paste für das Robocasting verwendet werden.

In dem erfindungsgemäßen Verfahren werden bevorzugt zumindest einzelne Bereiche der Plattform (Bandstruktur) in einer weitgehend geschlossenen oder zumindest absaugbaren Umhausung (Kammer) angeordnet. Insbesondere der thermische Behandlungsschritt wird in der Regel geschlossen wie in einem Bandtrockner oder einem Bandkalzinierer durchgeführt. Die Begriffe Bandtrockner und Bandkalzinierer können überlappen, so kann ein Bandkalzinierer ähnlich wie ein Bandtrockner aufgebaut sein, wird aber bei relativ höheren Temperaturen betrieben. Trocknungs- und weitere thermische Behandlungsschritte (Kalzinierschritte) können auch in einem gemeinsamen Apparat durchgeführt werden, der dann vorzugsweise mit einer Reihe von mehr oder weniger scharf getrennten Temperaturzonen betrieben werden kann.

Eine geeignete Bandkalzinier-Vorrichtung ist beispielsweise in EP 1 889 657 A2 beschrieben. Diese umfasst als Mittel zur Erzeugung der Gaszirkulation einen Ventilator, der in geeigneter Weise oberhalb des Förderbands in der Kammer (den Kammern) angeordnet ist. In geeigneten Ausführungsformen umfassen die Mittel zum Erzeugen der Gaszirkulation außerdem Gasleiteinrichtungen zum Leiten der Gaszirkulation innerhalb der Kammer, wobei sich die Gasleiteinrichtungen innerhalb der Kammer jeweils am Rand des Förderbands im Wesentlichen in einer Ebene senkrecht zur Auflagefläche des Förderbands erstrecken. Die Mittel zum Erzeugen der Gaszirkulation und/oder die Gasleiteinrichtungen sind zweckmäßigerweise so ausgebildet, dass das Gas durch das gasdurchlässige Förderband und die darauf befindlichen teilchenförmigen Katalysatorvorläufer aufsteigt und an den Wänden der Kammer wieder absteigt. Andererseits ist aber auch eine Gaszirkulation in umgekehrter Richtung vorstellbar. Weist die Bandkalzinier-Vorrichtung wenigstens zwei beheizbare Kammern auf, sind diese vorzugsweise so gegeneinander abgegrenzt, dass im Wesentlichen kein Gasaustausch zwischen den Kammern stattfindet. Zur Entfernung von Zersetzungsgasen und dergleichen wird vorzugsweise kontinuierlich oder periodisch ein Teil des in der Kammer umgewälzten Gases entfernt und durch Frischgas ersetzt. Die Zufuhr von Frischgas wird dabei so gesteuert, dass die Temperaturkonstanz in der Kammer nicht beeinträchtigt wird. Das Volumen des pro Zeiteinheit in der Kammer zirkulierten Gases ist in der Regel größer als das Volumen des der Kammer pro Zeiteinheit zu- oder daraus abgeführten Gases und beträgt vorzugsweise wenigstens das Fünffache davon.

Es können auch mehrere, z.B. zwei oder drei, der oben beschriebenen Bandkalzinier-Vorrichtungen nacheinander durchlaufen werden. Der Katalysatorvorläufer kann gegebenenfalls nach dem Durchlaufen einer Vorrichtung und vor dem Durchlaufen einer weiteren Vorrichtung gesammelt und zwischengelagert werden.

Auch der Bereich, in dem der Robocasting-Schritt durchgeführt wird, kann von einer absaugbaren Umhausung umgeben sein. Das ist insbesondere dann erforderlich, wenn die Katalysatormaterialien gesundheitsschädliche Stoffe enthalten oder brennbare Lösemittel bei der Herstellung der extrudierbaren Pasten eingesetzt werden. Gegebenenfalls ist bei der Verwendung von organischen Zusätzen oder anderen Stoffen, die explosionsfähige Gasatmosphären bilden können, wie beispielsweise Ammoniak, auch eine Auslegung der Umhausung und der Abgasabsaugung als Explosions-Schutzbereich geboten. Erforderlich kann auch die Behandlung der aus der Umhausung abgesaugten Abluft mittels Filtern, Wäschern, Verbrennungsanlagen oder DeNOx-Einrichtungen sein. Bei einer Absaugung der Umhausung wird vorzugsweise auch eine entsprechende Zuluft-Versorgung vorgesehen.

In einer Ausführungsform des erfindungsgemäßen Verfahrens findet auch eine kontinuierliche oder diskontinuierliche Reinigung der Plattform (Bandstruktur) von möglichen Anhaftungen statt. Dies kann beispielsweise mechanisch durch Bürsten oder mithilfe einer Reinigungsflüssigkeit, beispielsweise mittels Spritzdüsen, erfolgen. Bevorzugt wird so eine Reinigung automatisch in einem Abschnitt der Bandstruktur außerhalb des Bereichs des Robocasting- oder des thermischen Behandlungsschritts durchgeführt.

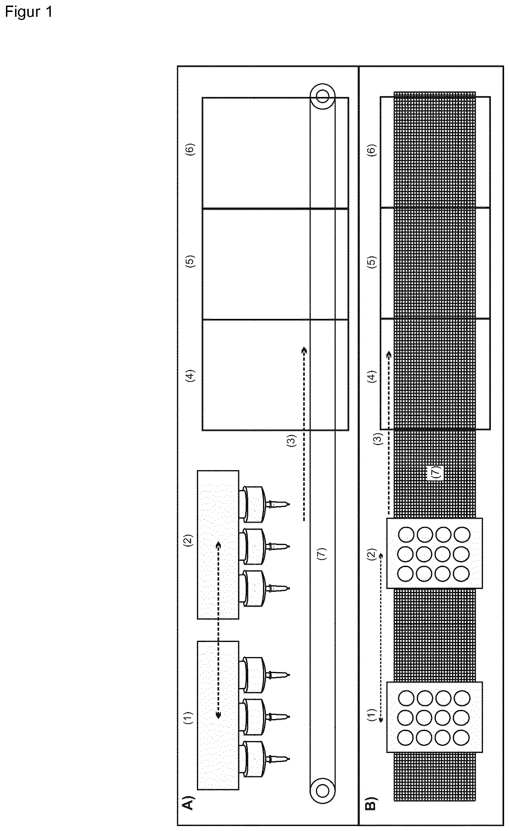

Die Erfindung wird in den Figuren 1 bis 8 näher erläutert.
Figur 1 zeigt eine schematische Darstellung einer beispielhaften Ausführungsform des erfindungsgemäßen Mikroextrusionsverfahrens in A) Seitenansicht und B) Aufsicht. Dabei wird der Multiextrusionskopf umfassend eine Mehrzahl von einzelnen Mikroextrusionsdüsen, beispielsweise 12 einzelnen Mikroextrusionsdüsen, entlang des sich in die Richtung (3) bewegenden Förderbandes (7) während des Mikroextrusionsschrittes von der Ausgangsposition (1) in die Endposition (2) verfahren. Die mikroextrudierten Formkörper aus Katalysatorvorläufermaterial durchlaufen auf dem perforierten Förderband (7) Bandtrockner oder Kalzinieröfen mit beispielsweise drei Temperaturzonen (4), (5) und (6).

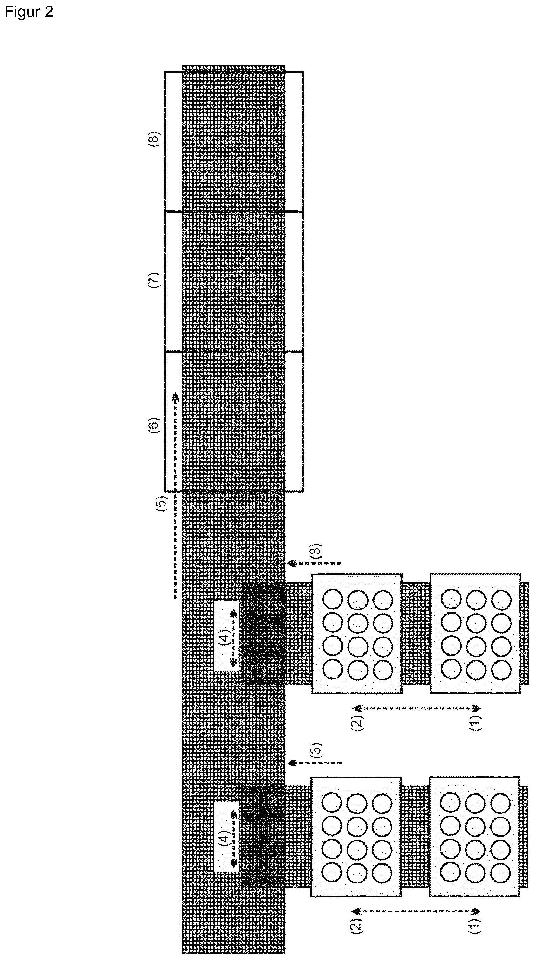

Figur 2 zeigt eine schematische Darstellung einer weiteren beispielhaften Ausführungsform des erfindungsgemäßen Mikroextrusionsverfahrens in Aufsicht. Dabei wird ein Bandtrockner oder -kalzinierer von mehreren Beschickungsförderbändern mit mikroextrudierten Formkörpern aus Katalysatorvorläufermaterial beschickt. Dabei wird je Beschickungsförderband ein Multiextrusionskopf umfassend eine Mehrzahl von einzelnen Mikroextrusionsdüsen, beispielsweise 12 einzelnen Mikroextrusionsdüsen, entlang des sich in die Richtung (3) bewegenden Beschickungsförderbandes während des Mikroextrusionsschrittes von der Ausgangsposition (1) in die Endposition (2) verfahren. Am Übergangspunkt (4), an dem das Beschickungsförderband in Richtung des Doppelpfeils lateral verfahrbar ist, werden die Plattformen mit den mikroextrudierten Formkörpern von Beschickungsförderband auf das Förderband eines Bandtrockners oder -kalzinierers übergeben. Die mikroextrudierten Formkörper durchlaufen auf dem sich in die Richtung (5) bewegenden perforierten Förderband beispielsweise die Temperaturzonen (6), (7) und (8).

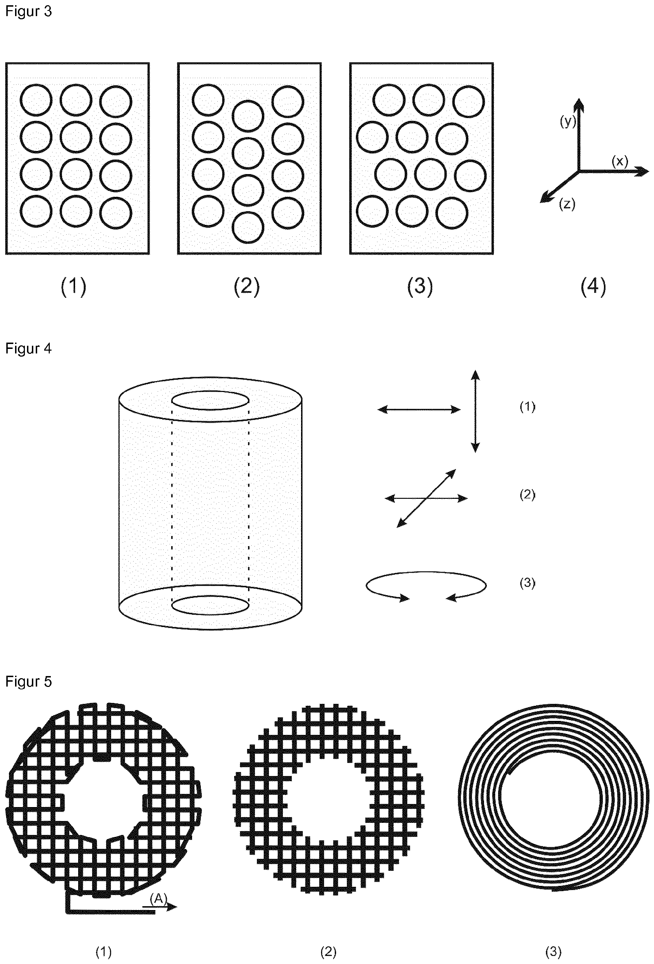

Figur 3 zeigt verschiedene Anordnungen der einzelnen Mikroextrusionsdüsen in einem Mikroextrusionskopf. Diese können (1) streng parallel, (2) in longitudinaler Richtung versetzt oder (3) in horizontaler Richtung versetzt angeordnet sein. (4) gibt schematisch die 3 Raumrichtungen x, y und z der Bewegung der einzelnen Mikroextrusionsdüsen bzw. des gesamten Mikroextrusionskopfes wieder.
Figur 4 zeigt (rechts) verschiedene Möglichkeiten, wie die Mikroextrusionsdüsen zum schichtweisen Aufbau, beispielsweise eines hohlzylindrischen Formkörpers (links), bewegt werden können: (1) axial und radial; (2) senkrecht zur Achse; (3) zirkular.
Figur 5 zeigt in Aufsicht Möglichkeiten der Mikroextrusionsstrangführung beim schichtweisen Aufbau eines hohlzylindrischen Formkörpers aus Figur 4. Die Extrusion kann (1) kontinuierlich in einem Endlosstrang erfolgen, wobei (A) schematisch den Übergang des Endlosstrangs nach Fertigstellung eines Formkörpers zum nächsten Formkörper anzeigt. Die Extrusion kann (2) diskontinuierlich erfolgen, wobei diskrete Stränge aus extrudiertem Material zu einem Formkörper zusammengefügt werden. Die Extrusion kann (3) kontinuierlich in einem kreisförmigen Muster erfolgen. Es sind auch beliebige Mischformen dieser Strangführungen beim erfindungsgemäßen Aufbau eines Formkörpers möglich.
   Grundsätzlich kann es zur erfindungsgemäßen Fertigung der Formkörper mit hoher Geschwindigkeit und Präzision vorteilhaft sein, beim schichtweisen Aufbau der Formkörper die Extrusion innerhalb einer Schicht oder Ebene entweder nur in x- oder nur in y-Richtung, entsprechend den Bewegungsmöglichkeiten der Mikroextrusionsdüsen, also ohne vektorielle Bewegungsanteile in der jeweils anderen Raumrichtung auszuführen. In Figur 5(2) sind die Extrusionsabschnitte innerhalb der Ebene ausschließlich so ausgeführt. In Figur 5(3) wird die Extrusion mit sich laufend ändernden vektoriellen Anteilen in x- und y-Richtung ausgeführt. In Figur 5(1) wurde die Extrusion innerhalb einer Schicht teilweise in nur einer Raumrichtung x oder y und teilweise in Bewegungsrichtung mit vektoriellen Anteilen in x- und y-Richtung ausgeführt.
   Eine Makroporosität der erfindungsgemäß hergestellten Formkörper kann durch den Abstand verschiedener Abschnitte von kontinuierlichen oder diskontinuierlich ausgeführten Extrusionssträngen zueinander eingestellt werden. Der Abstand verschiedener Abschnitte von kontinuierlichen oder diskontinuierlich ausgeführten Extrusionssträngen innerhalb eines erfindungsgemäß hergestellten Formkörpers kann, muss aber nicht gleichförmig oder regelmäßig sein.

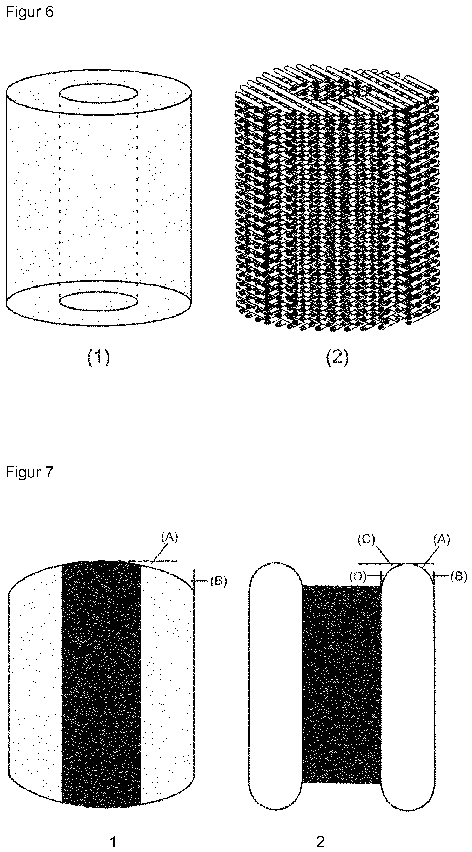

Figur 6 zeigt schematisch und beispielhaft eine Ausführungsform eines erfindungsgemäß hergestellten Katalysators in Form eines Hohlzylinders.
Figur 7 zeigt im Querschnitt schematisch Beispiele von erfindungsgemäß hergestellten Katalysatoren in Form von Hohlzylindern mit abgerundeten Stirnflächen: 7(1) Zylinder mit abgerundeten äußeren Kanten, die durch die Winkel (A) und (B) beschrieben werden; 7(2) Zylinder mit abgerundeten inneren und äußeren Kanten, die durch die Winkel (A), (B), (C) und (D) beschrieben werden.

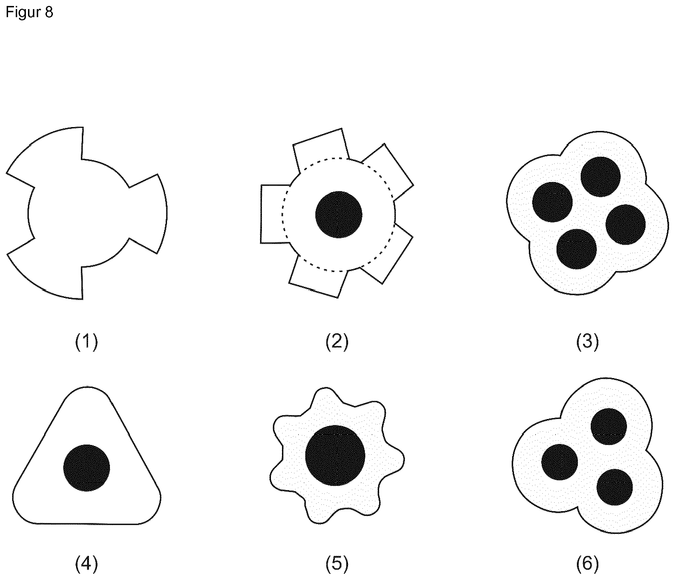

Figur 8 zeigt weitere Beispiele von möglichen Formkörper-Geometrien im Querschnitt. Alle Formkörper können gemäß Figur 5 aufgebaut sein. (1) Zylinder mit longitudinalen Aussparungen; (2) 5-gliedrige Zahnradform mit zentralem Durchlass; (3) vierblättrige Kleeblattform mit 4 zentralen Durchlässen; (4) Dreieckform mit zentralem Durchlass; (5) 7-zackiger Sternform mit zentralem Durchlass;(6) dreiblättrige Kleeblattform mit 3 zentralen Durchlässen. Solche Formkörper werden mit dem erfindungsgemäßen Verfahren bevorzugt so hergestellt, dass die in Figur 8 dargestellte Querschnittsebene parallel zur Ebene der beweglichen Unterlage (Plattform) ausgerichtet ist. Die Formkörper können eine Spiegelebene parallel zu diesen Querschnittsebenen aufweisen, wie das auch bei einem Hohlzylinder entsprechend Figur 6(1) der Fall ist.

## Patentansprüche

1. Verfahren zur Herstellung von Katalysatorformkörpern durch Mikroextrusion, bei dem eine pastöse Suspension eines Katalysatorformkörper-Vorläufermaterials in einem flüssigen Verdünnungsmittel durch eine bewegliche Mikroextrusionsdüse extrudiert und durch Bewegung der Mikroextrusionsdüse ein Katalysatorformkörper-Vorläufer schichtweise erzeugt wird und der Katalysatorformkörper-Vorläufer anschließend einer thermischen Behandlung unterworfen wird, **dadurch gekennzeichnet, dass** auf einer beweglichen Plattform durch eine Mehrzahl von Mikroextrusionsdüsen eine Mehrzahl von Katalysatorformkörper-Vorläufern gleichzeitig erzeugt wird.

2. Verfahren nach Anspruch 1, **dadurch gekennzeichnet, dass** die Plattform kontinuierlich oder diskontinuierlich relativ zu den Mikroextrusionsdüsen bewegt wird.

3. Verfahren nach Anspruch 2, **dadurch gekennzeichnet, dass** die Plattform nach der Erzeugung einer Mehrzahl von Katalysatorformkörper-Vorläufern diskontinuierlich bewegt wird.

4. Verfahren nach Anspruch 2, **dadurch gekennzeichnet, dass** die Plattform während der Erzeugung der Katalysatorformkörper-Vorläufer kontinuierlich bewegt wird, wobei die Bewegung der Mikroextrusionsdüsen die Bewegung der Plattform kompensiert.

5. Verfahren nach einem der Ansprüche 1 bis 4, **dadurch gekennzeichnet, dass** eine Mehrzahl von Mikroextrusionsdüsen miteinander verbunden ist und synchron bewegt wird.

6. Verfahren nach einem der Ansprüche 1 bis 6, **dadurch gekennzeichnet, dass** die bewegliche Plattform ein umlaufendes Band ist.

7. Verfahren nach Anspruch 6, **dadurch gekennzeichnet, dass** das umlaufende Band ein kontinuierliches Band ist.

8. Verfahren nach Anspruch 6, **dadurch gekennzeichnet, dass** das umlaufende Band einzelne Segmente aufweist.

9. Verfahren nach einem der Ansprüche 6 bis 8, **dadurch gekennzeichnet, dass** auf dem umlaufenden Band die Katalysatorformkörper-Vorläufer einer Trocknung als thermischer Behandlung unterworfen werden, wobei das Band mindestens eine Trocknungszone durchläuft.

10. Verfahren nach Anspruch 9, **dadurch gekennzeichnet, dass** das umlaufende Band Teil eines Bandtrockners oder Bandkalzinierers ist.

11. Verfahren nach Anspruch 9 oder 10, **dadurch gekennzeichnet, dass** das umlaufende Band Perforationen aufweist und eine Trocknung mittels eines erwärmten Gases, das in der mindestens einen Trocknungszone die Perforationen durchströmt, erfolgt.

12. Verfahren nach einem der Ansprüche 9 bis 11, **dadurch gekennzeichnet, dass** die Trocknung in mehreren Trocknungszonen bei unterschiedlichen Temperaturen erfolgt.
